# EUROPÄISCHE PATENTSCHRIFT

(11) **EP 2 946 669 B1**
(45) Veröffentlichungstag und Bekanntmachung des Hinweises auf die Patenterteilung: **25.07.2018**
(21) Anmeldenummer: 14168880.4
(22) Anmeldetag: 19.05.2014
(51) Int. Cl.: A23C 1/10, A23C 1/12, A23C 3/033, A23C 9/18, A23C 13/12, A23C 21/00, A23L 3/40, A23G 1/46, A23C 1/01, A23C 1/16, A23C 21/08

(54) **Milchpulver mit verbesserten sensorischen Eigenschaften**
Milk powder with improved sensoric properties
Lait en poudre avec propriétés sensoriques améliorées

(43) Veröffentlichungstag der Anmeldung: 25.11.2015
(73) Patentinhaber: DMK Deutsches Milchkontor GmbH, 27404 Zeven (DE)
(72) Erfinder: Diekhaus, Martin, 49451 Holdorf (DE)
(74) Vertreter: Fabry, Bernd

(56) Entgegenhaltungen:
- WO-A1-2015/136506
- US-A- 4 075 767
- US-A- 4 417 697
- US-A- 4 871 573
- DE KONING K: "Milchschokolade-Crumb und Blokmilk", ZUCKER- UND SUESSWAREN WIRTSCHAFT, BECKMANN, LEHRTE, DE, Bd. 45, Nr. 10, 1. Januar 1992 (1992-01-01), Seiten 368-370, XP008122406, ISSN: 0373-0204

## Beschreibung

### GEBIET DER ERFINDUNG

Die Erfindung befindet sich auf dem Gebiet der Milchprodukte und betrifft ein Verfahren zur Herstellung von Milchpulvern mit verbesserten sensorischen Eigenschaften.

### STAND DER TECHNIK

Zur Herstellung von Vollmilchpulvern geht man üblicherweise von Vollmilch aus, die im ersten Schritt in Eindampfern aufkonzentriert wird, bevor der restliche Wasseranteil anschließend durch Sprüh- oder Walzentrocknung abgetrennt wird. Die Pulver enthalten typisch etwa 26 Gew.-% Lipide, etwa 25 Gew.-% Proteine und etwa 38 Gew.-% Lactose. Milchpulver dient u.a. zur Herstellung von Milchgetränken, aber auch als Grundstoff für viele Backwaren und Schokoladeprodukte. Gerade was die Getränkeherstellung angeht, sind solche Pulver bevorzugt, die über eine gute Löslichkeit verfügen.

So ist beispielsweise aus der Europäischen Patentanmeldung EP 2679098 A1 (DMK) ein Verfahren zur Herstellung keimarmer Milchpulver mit einem Molkenproteinindex (MPI) von mindestens 2 bekannt, bei dem man (a) Rohmilch in an sich bekannter Weise von Feststoffen befreit, den Rahm abtrennt, (b) die so erhaltene Magermilch einer Mikrofiltration unterwirft, (c) das so erhaltene Permeat pasteurisiert, (c) das so erhaltene pasteurisierte Permeat auf eine Trockenmasse von 30 bis 50 Gew.-% konzentriert und das Retentat verwirft, (d) das so erhaltene Konzentrat einer Temperaturbehandlung über einen Zeitraum von mindestens 15 Sekunden bei mindestens 72 °C unterwirft, und (e) das so erhaltene temperaturbehandelte Produkt zu einem trockenen Pulver verarbeitet.

Aus der CN 20111116530 A1 ist ein Verfahren bekannt, bei dem man Magermilch bei 72 bis 78 °C sterilisiert und anschließend im Vakuum bei 45 bis 75 °C in einem Fallstromverdampfer aufkonzentriert. Das Produkt wird anschließend durch Sprühtrocknung bei 180 bis 200 °C entwässert und zu einem trockenen Pulver verarbeitet.

Das Dokument US 4,417,697 offenbart die Verwendung eines Vakuumtrockners zur Verarbeitung der Vollmilchkonzentrate zu Milchpulver, einschließlich einer mit einem Mehrebenen-Transportband und einem Heizungsgerät ausgestattete Vakuumkammer. Die Vollmilchkonzentrate werden durch die festgelegten Düsen auf die Oberfläche jedes der Bänder aufgebracht.

Das Dokument US 4,075,767 beschäftigt sich mit einer Vakuumapparatur mit einem Transportband zur Herstellung von Pulver aus Schlämmen, wobei Milch die genutzten Schlämme sein können. Gemäß der Anmeldung ist die Vakuumapparatur durch ihre schlitzförmige Eingangsöffnung mit einem Schlämme-Lagertank verbunden und fährt das Transportband durch den Lagertank in die Vakuumapparatur, damit die Schlämme in die Apparatur gebracht werden.

Der Report **"**Milchschokolade-Crumb und Blokmilk" (Zucker- und Suesswaren Wirtschaft, 1992, 45 (10), 368-370) stellt die Herstellung eines Milch-Crumb Konzentrates vor, wobei als ein alternatives Trockenverfahren die Vakuumband-Trocknung bezeichnet wird.

Das Dokument US 4,871,573 betrifft betrifft ein Verfahren zur Herstellung eines Milchpulvers, das, bezogen auf das Gewicht der Trockenmaterialen, 20 bis 30 % Fette enthält und worin die Lactose im Wesentlichen in kristallisierter Form vorliegt. Das Verfahren ist dadurch gekennzeichnet, dass man Vollmilch oder Magermilch bei 60 bis 150 °C während einiger Sekunden bis zu 30 Minuten pasteurisiert, dass man die thermisch behandelte Milch bis auf 30 bis 60 Gew.-% Trockenmaterial konzentriert und dass man das Konzentrat auf eine Temperatur unter 40 °C abkühlt, dass man das abgekühlte Konzentrat mit Lactosekristallen mit Abmessungen von kleiner als oder gleich 2 µm beimpft, dass man die Kristallisation der Lactose in Form feiner Kristalle unter langsamen und dauerndem Rühren während 30 Minuten bis 30 Stunden bewirkt, dass man die erhaltene Suspension auf 0 bis 20 °C abkühlt, und dass man das Konzentrat mittels Sprühtrocknung trocknet.

Von Nachteil ist, dass gängige Trocknungsverfahren Pulvergemische mit einer Partikelgrößenverteilung liefern, so dass die aus anwendungstechnischer Sicht gewünschten oder bevorzugten Größenfraktionen umständlich ausgesiebt und zu große und zu kleine Teilchen wieder in den Prozess zurückgegeben werden müssen.

Ebenfalls nachteilig ist, dass die Pulver des Stands der Technik infolge einer ungünstigen Partikelgrößenverteilung häufig sensorisch nicht einwandfrei sind und insbesondere einen sandigen Geschmack aufweisen. Diese Produkte sind nur eingeschränkt marktfähig, da die geschmackliche Fehlnote stets individuell durch Zugabe von Aromen überdeckt oder kompensiert werden muss.

Die Aufgabe der vorliegenden Erfindung hat somit darin bestanden, Vollmilchpulver zur Verfügung zu stellen, die frei von den eingangs geschilderten Nachteilen sind. Insbesondere sollten ohne aufwendige Siebverfahren unmittelbar Pulver erhalten werden, die eine so vorteilhafte Partikelverteilung aufweisen, dass sie gleichzeitig leicht wasserlöslich und geschmacklich einwandfrei sind.

### BESCHREIBUNG DER ERFINDUNG

Gegenstand der Erfindung ist ein Verfahren zur Herstellung von Vollmilchpulvern mit verbesserten sensorischen Eigenschaften, bei dem man
(a) eine Mischung aus einem Milcherzeugnis und Zucker herstellt,
(b) die Mischung einer ersten Temperaturbehandlung unterwirft und dabei gleichzeitig sterilisiert und aufkonzentriert,
(c) das so gewonnene Konzentrat einer zweiten Temperaturbehandlung unterwirft, bei der es zur Karamellisierung kommt,
(d) das so gewonnene karamellisierte Produkt einer ersten Kühlung unterwirft,
(e) das so gewonnene erste gekühlte Produkt mit Kohlenhydratkristallen impft,
(f) das so gewonnene geimpfte Produkt einer zweiten Kühlung unterwirft,
(g) das so gewonnene zweite gekühlte Produkt einer Trocknung auf einem Vakuumbandtrockner mit anschließender Zerkleinerung unterwirft, und schließlich
(h) das trockene Pulver ausschleust.

Das erfindungsgemäße Verfahren nutzt als Milcherzeugnisse beispielsweise Magermilch, Molke, Sahne und insbesondere Vollmilch.

Überraschenderweise wurde gefunden dass die Kombination der einzelnen Prozessschritte, insbesondere die besondere Kühlung gefolgt von der Vakuumbandtrocknung, zu Vollmilchpulvern führen, die ohne weitere Maßnahmen eine sehr vorteilhafte Partikelgrößenverteilung aufweisen. Die Pulver sind insbesondere leicht löslich und sensorisch einwandfrei.

### STERILISATION UND KONZENTRIERUNG

Im ersten Abschnitt des Verfahrens wird eine hochgezuckerte Vollmilch sterilisiert und eingedampft. Dabei werden Vollmilch und Zucker in einer Rührvorrichtung vorzugsweise im Gewichtsverhältnis von 40:60 bis 60:40 und insbesondere 50:50 gemischt, so dass eine Zubereitung entsteht, die eine Trockenmasse von 25 bis 40 Gew.-% und insbesondere von 30 bis 35 Gew.-% aufweist.

Die gezuckerte Vollmilch wird einer ersten Temperaturbehandlung unterworfen, die dazu dient, das Produkt zu sterilisieren. Üblicherweise werden dazu in einem Vorerhitzer Temperaturen von 100 bis 150 °C und insbesondere von 110 bis 140 °C angelegt.

Das sterilisierte Produkt wird in einen Eindampfer, vorzugsweise einen Fallstromverdampfer eingespeist, in dem es unter Anlegen eines Temperaturgradienten von 100 bis auf 50 °C und insbesondere 95 bis auf 55 °C schonend entwässert wird, so dass eine gezuckerte Kondensmilch mit einer Trockenmasse von 65 bis 90 Gew.-% und vorzugsweise 70 bis 80 Gew.-% anfällt.

### KARAMELISIERUNG

Das so erhaltene Konzentrat wird in einen Nacherhitzer überführt, indem es karamellisiert wird. Dazu wird es im Ofen bei Temperaturen von 85 bis 95 °C über einen Zeitraum von 15 bis 30 Minuten belassen.

### KÜHLUNG

An die Karamellisierung schließt sich die Kühlung an. Dieser Prozessschritt ist kritisch, denn es kommt darauf an, dass hier Partikel erzeugt werden, die eine enge Größenverteilung aufweisen und im Mittel (D90) einen Durchmesser von weniger als 15 µm aufweisen. Derartige Vorstufen sind dafür mit entscheidend, dass die konfektionsfähigen Endprodukte die gewünschte Löslichkeit und Sensorik besitzen. Um dies zu gewährleisten wird das Produkt zunächst in einem ersten Schritt auf 30 bis 40 °C abgekühlt. Die Lösung ist an dieser Stelle überzuckert, d.h. Zucker würde beginnen sich abzuscheiden, was zu einer unkontrollierten Agglomeration und Wachstum der Partikel führen würde. Daher wird die Lösung mit Kohlenhydratkristallen geimpft, die das Lösungsgleichgewicht wieder verschieben.

Als Kohlenhydrate kommen hier in erster Linie Lactose, Glucose und Maltose in Betracht. Die Einsatzmenge liegt bei 150 bis 250 und vorzugsweise bei 200 g pro 1000 kg Konzentrat, entsprechend 0,2 Gew.-%. Anschließend wird die Lösung - beispielsweise bei Verwendung von Lactoseimpfkristallen - im zweiten Schritt auf 20 bis 25 °C abgekühlt und ist nun fertig, um getrocknet zu werden.

Grundsätzlich ist es auch möglich, die Kühlung in einem Schritt durchzuführen, solange eine hinreichende Menge an Impfkristallen zugegeben wird. Dies ist etwa bei Verwendung von Glucose der Fall. Beim Einsatz speziell von Lactose hat sich hingegen der zweistufige Prozess als vorteilhafter im Hinblick auf eine Kristallisationsinhibierung erwiesen.

### VAKUUMBANDTROCKNUNG

Vakuumbandtrockner bestehen im Wesentlichen aus einem Gehäuse mit eingebauten, das Produkt befördernden Transportbändern, welche über Heizaggregate gezogen werden. Eine automatische Bandregulierung sorgt für einen präzisen Bandlauf. Die Bänder werden in einer oder mehreren Ebenen parallel gefahren und jedem der Bänder wird eine Dosierpumpe mit oszillierender Düse zugeordnet, die das Produkt erfindungsgemäß als Schaum aufträgt. Die Anmelderin hat gefunden, dass gerade diese Art der Dosierung dazu führt, dass schließlich Produkte erhalten werden, die gegenüber denen beispielsweise aus der Sprühtrocknung hinsichtlich der Partikelgrößenverteilung und damit Löslichkeit und Sensorik deutlich überlegen sind. Hinzu kommt die Siedepunktverschiebung im Vakuum, die dafür sorgt, dass die Verdampfungstemperatur sinkt und das Produkt schonender getrocknet werden kann. Das Prinzip ist dabei bereits seit Mitte der 50er Jahre des vergangenen Jahrhunderts bekannt (vgl. DE 948678 A**,** BAYER).

Die hochgezuckerten Milchprodukte durchlaufen während des Trocknens eine hochviskose, vielfach auch klebrige Phase, wodurch sich durch Dampfblasenbildung im Produkt am Ende des Trockenverlaufes auf dem Band ein Trockenkuchen bildet. Während die Bänder zunächst über mehrere von einander unabhängig einstellbare Heizzonen laufen, stellt die letzte Zone eine Kühlzone dar, in der der Trockenkuchen bis zur Sprödbrüchigkeit abgekühlt, mit einer Guillotine abgebrochen und im Brecher oder Granulator zerkleinert wird.

Der Vakuumbandtrockner kann mit Dampf, Druckwasser oder Thermoöl geheizt werden, das Vakuum wird im Allgemeinen mit einer Kombination aus Dampfstrahlpumpe mit nachgeschaltetem Kondensator und Wasserringvakuumpumpe erzeugt. In den Heizzonen beträgt die Temperatur dabei 60 bis 90 °C und insbesondere 70 bis 80 °C, wobei der Druck in der Regel bei 0,1 bis 0,9 bar und insbesondere 0,2 bis 0,8 bar liegt. Die Heizzonen sind wie schon erwähnt individuell steuerbar, so dass es möglich ist, ein beliebiges Temperaturprofil anzulegen. In der Kühlzone herrschen dann Temperaturen von 20 bis 25 °C. Grundsätzlich gilt, die Trocknung bei möglichst niedrigen Temperaturen durchzuführen, um die Entstehung von nicht löslichen Partikeln zu minimieren. Eine bauliche Alternative wäre beispielsweise auch ein Vakuumtrockenschrank.

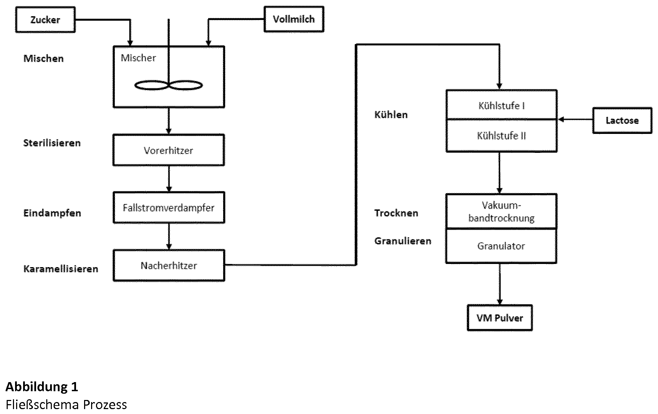

**Abbildung 1** zeigt ein Fließbild des Prozesses.

### Beispiel 1

Eine gezuckerte Vollmilch mit einem Zuckeranteil von 51 Gew.-% und einer Trockenmasse von 33 Gew.-% wurde in einem Vorerhitzer bei 145 °C sterilisiert und anschließend in einem Fallstromverdampfer unter Anlegen eines Temperaturgradienten von 95 auf 55 °C bis zu einer Trockenmasse von 75 Gew.-% eingedampft. Das Produkt wurde in einem Nacherhitzer 25 Minuten bei 90 °C karamellisiert und anschließend auf 30 °C abgekühlt. Die Lösung wurde mit 0,2 Gew.-% kristalliner Lactose versetzt, intensiv gerührt und dann auf 20 °C abgekühlt. Die gekühlte Masse wurde über eine Förderpumpe und eine oszillierende Düse auf das Förderband eines Vakuumbandtrockners geschäumt. Dieser wies drei Heizzonen (80, 70 und 50 °C) und eine Kühlzone (25 °C) auf (Druck: 0,5 bar). Der Trockenkuchen wurde zerkleinert und die Löslichkeit des Pulvers in Wasser (g/Liter) sowie die sensorischen Eigenschaften (sandiger Geschmack: 3 = ausgeprägt, 2 = vorhanden, 1 = nicht festzustellen) von einem Panel bestehend aus drei erfahrenen Testern beurteilt.

### Vergleichsbeispiel V1

Beispiel 1 wurde wiederholt, das karamellisierte Produkt jedoch in einem Schritt ohne Zugabe von Impfkristallen auf 25 °C abgekühlt.

### Vergleichsbeispiel V2

Beispiel 1 wurde wiederholt, die Trocknung jedoch in einem Sprühtrockner bei einer Temperatur von 180 °C durchgeführt.

### Vergleichsbeispiel V3

Beispiel 1 wurde wiederholt, die Trocknung jedoch auf einer Trockenwalze bei einer Temperatur von 140 °C durchgeführt.

Die Ergebnisse sind in **Tabelle 1** zusammengefasst. Sie zeigen, dass nur die nach dem erfindungsgemäßen Verfahren erhältlichen Produkte hinsichtlich Löslichkeit und Sensorik den Anforderungen entsprechen.

**Tabelle 1**

| Löslichkeit und Sensorik | | |
|---|---|---|
| **Beispiele** | **Löslichkeitsindex (ml)** | **Sensorik (Mittelwert)** |
| 1 | <0,1 | 1 |
| V1 | <0,2 | 2 |
| V2 | 2,0 | 3 |
| V3 | 6,0 | 3 |

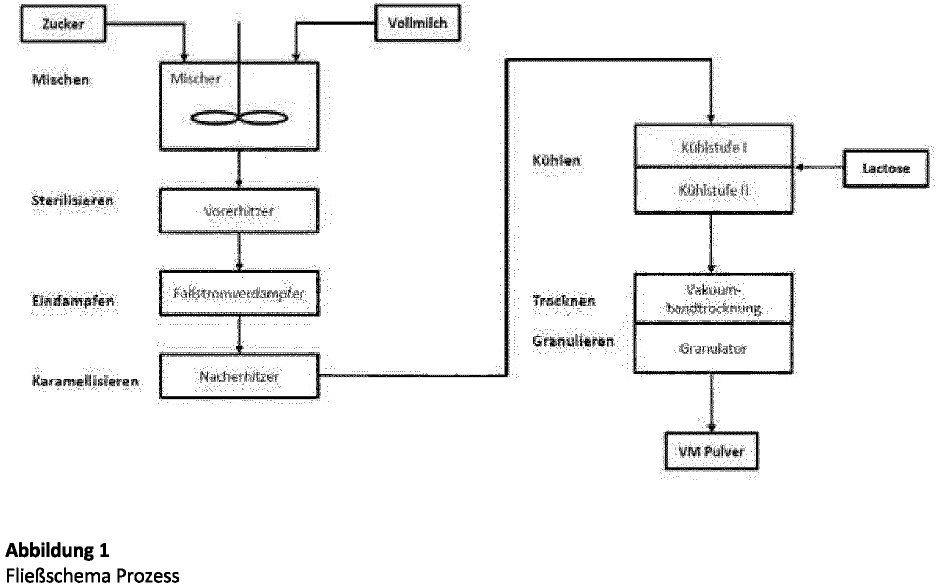

## Patentansprüche

1. Verfahren zur Herstellung von Milchpulvern mit verbesserten sensorischen Eigenschaften, bei dem man
(a) eine Mischung aus einem Milcherzeugnis und Zucker herstellt,
(b) die Mischung einer ersten Temperaturbehandlung unterwirft und dabei gleichzeitig sterilisiert und aufkonzentriert,
(c) das so gewonnene Konzentrat einer zweiten Temperaturbehandlung unterwirft, bei der es zur Karamellisierung kommt,
(d) das so gewonnene karamellisierte Produkt einer ersten Kühlung unterwirft
(e) das so gewonnene erste gekühlte Produkt mit Kohlenhydratkristallen impft,
(f) das so gewonnene geimpfte Produkt einer zweiten Kühlung unterwirft,
(g) das so gewonnene zweite gekühlte Produkt einer Trocknung auf einem Vakuumbandtrockner mit anschließender Zerkleinerung unterwirft, und schließlich
(h) das trockene Pulver ausschleust.

2. Verfahren nach Anspruch 1, **dadurch gekennzeichnet, dass** man als Milcherzeugnis Vollmilch, Magermilch, Molke oder Sahne einsetzt.

3. Verfahren nach den Ansprüchen 1 und/oder 2, **dadurch gekennzeichnet, dass** man im Schritt (a) eine Mischung einsetzt, die das Milcherzeugnis und Zucker im Gewichtsverhältnis von 40:60 bis 60:40 enthält.

4. Verfahren nach mindestens einem der Ansprüche 1 bis 3, **dadurch gekennzeichnet, dass** man im Schritt (a) eine Mischung einsetzt, die eine Trockenmasse von 25 bis 40 Gew.-% aufweist.

5. Verfahren nach mindestens einem der Ansprüche 1 bis 4, **dadurch gekennzeichnet, dass** man die erste Temperaturbehandlung im Schritt (b) zweistufig zunächst bei einer Temperatur im Bereich von 100 bis 150 °C und dann unter Anlegen eines Temperaturgradienten von 100 bis 50 °C durchführt.

6. Verfahren nach mindestens einem der Ansprüche 1 bis 5, **dadurch gekennzeichnet, dass** man im Schritt (b) ein Konzentrat mit einer Trockenmasse von 65 bis 90 Gew.-% herstellt.

7. Verfahren nach mindestens einem der Ansprüche 1 bis 6, **dadurch gekennzeichnet, dass** man die Karamellisierung im Schritt (c) bei einer Temperatur im Bereich von 85 bis 95 °C durchführt.

8. Verfahren nach mindestens einem der Ansprüche 1 bis 7, **dadurch gekennzeichnet, dass** man die erste und die zweite Kühlung (Schritte d und f) bei Temperaturen im Bereich von 30 bis 40 °C bzw. 20 bis 25 °C durchführt.

9. Verfahren nach mindestens einem der Ansprüche 1 bis 8, **dadurch gekennzeichnet, dass** man die Vakuumbandtrocknung bei Temperaturen in den Heizzonen im Bereich von 60 bis 90 °C und Drücken von 0,1 bis 0,9 bar durchführt.

10. Verfahren nach mindestens einem der Ansprüche 1 bis 9, **dadurch gekennzeichnet, dass** man das gekühlte Produkt aus Schritt (f) mit Hilfe einer Förderpumpe und einer oszillierenden Düse als Schaum auf die Förderbänder des Vakuumbandtrockners aufträgt.

## Claims

1. A process for producing milk powders having improved sensory properties, in which:
(a) a mixture is produced from a milk product and sugar,
(b) the mixture is subjected to a first temperature treatment and in the course of this is simultaneously sterilized and concentrated,
(c) the concentrate thus obtained is subjected to a second temperature treatment in which caramelization occurs,
(d) the thus obtained caramelized product is subjected to a first cooling,
(e) the thus obtained first cooled product is seeded with carbohydrate crystals
(f) the thus obtained seeded product is subjected to a second cooling,
(g) the thus obtained second cooled product is subjected to a drying on a vacuum-belt dryer with subsequent comminution, and finally
(h) the dry powder is discharged.

2. The process according to claim 1, wherein the milk product used is whole milk, skimmed milk, whey or cream.

3. The process according to claims 1 and/or 2, wherein a mixture is used in step (a) containing the milk product and sugar in the weight ratio of 40:60 to 60:40.

4. The process according to at least one of claims 1 to 3, wherein a mixture is used in step (a) having a dry matter content of 25 to about 40% by weight.

5. The process according to at least one of claims 1 to 4, wherein the first temperature treatment in step (b) is carried out in two stages first at a temperature in the range from 100 to 150 °C and then with application of a temperature gradient from 100 to 50 °C.

6. The process according to at least one of claims 1 to 5, wherein a concentrate is produced in step (b) having a dry matter content of 65 to 90% by weight.

7. The process according to at least one of claims 1 to 6, wherein the caramelization in step (c) is carried out at a temperature in the range of 85 to 95 °C.

8. The process according to at least one of claims 1 to 7, wherein the first cooling and second cooling (steps d and f) are carried out at temperatures in the range of 30 to 40 °C and 20 to 25 °C, respectively.

9. The process according to at least one of claims 1 to 8, wherein the vacuum-belt drying is carried out at temperatures in the heating zones in the range of 60 to 90 °C and pressures of 0.1 to 0.9 bar.

10. The process according to at least one of claims 1 to 9, wherein the cooled product of step (f) is applied using a feed pump and an oscillating nozzle as foam to the conveyor belts of the vacuum-belt dryer.

## Revendications

1. Procédé de fabrication de poudres de lait ayant des propriétés sensorielles améliorées, selon lequel
(a) un mélange d'un produit de lait et de sucre est fabriqué,
(b) le mélange est soumis à un premier traitement thermique et simultanément stérilisé et concentré,
(c) le concentré ainsi obtenu est soumis à un deuxième traitement thermique lors duquel une caramélisation se produit,
(d) le produit caramélisé ainsi obtenu est soumis à un premier refroidissement,
(e) le premier produit refroidi ainsi obtenu est inoculé avec des cristaux d'hydrate de carbone,
(f) le produit inoculé ainsi obtenu est soumis à un deuxième refroidissement,
(g) le deuxième produit refroidi ainsi obtenu est soumis à un séchage sur un séchoir à bandes sous vide avec un broyage ultérieur, et enfin
(h) la poudre séchée est déchargée.

2. Procédé selon la revendication 1, **caractérisé en ce que** du lait entier, du lait écrémé, du lactosérum ou de la crème est utilisé en tant que produit de lait.

3. Procédé selon les revendications 1 et/ou 2, **caractérisé en ce qu'**un mélange qui contient le produit de lait et le sucre en un rapport en poids de 40:60 à 60:40 est utilisé à l'étape (a).

4. Procédé selon au moins l'une quelconque des revendications 1 à 3, **caractérisé en ce qu'**un mélange qui présente une masse sèche de 25 à 40 % en poids est utilisé à l'étape (a).

5. Procédé selon au moins l'une quelconque des revendications 1 à 4, **caractérisé en ce que** le premier traitement thermique à l'étape (b) est réalisé en deux étapes, tout d'abord à une température dans la plage allant de 100 à 150 °C, puis avec application d'un gradient de température de 100 à 50 °C.

6. Procédé selon au moins l'une quelconque des revendications 1 à 5, **caractérisé en ce qu'**un concentré présentant une masse sèche de 65 à 90 % en poids est fabriqué à l'étape (b).

7. Procédé selon au moins l'une quelconque des revendications 1 à 6, **caractérisé en ce que** la caramélisation à l'étape (c) est réalisée à une température dans la plage allant de 85 à 95 °C.

8. Procédé selon au moins l'une quelconque des revendications 1 à 7, **caractérisé en ce que** le premier et le deuxième refroidissement (étapes d et f) sont réalisés à des températures dans la plage allant de 30 à 40 °C ou de 20 à 25 °C.

9. Procédé selon au moins l'une quelconque des revendications 1 à 8, **caractérisé en ce que** le séchage sur bandes sous vide est réalisé à des températures dans les zones de chauffage dans la plage allant de 60 à 90 °C et des pressions de 0,1 à 0,9 bar.

10. Procédé selon au moins l'une quelconque des revendications 1 à 9, **caractérisé en ce que** le produit refroidi de l'étape (f) est appliqué à l'aide d'une pompe de transport et d'une buse oscillante sous la forme d'une mousse sur les bandes de transport du séchoir à bandes sous vide.
